# FASCICULE DE BREVET EUROPEEN

(11) **EP 1 696 014 B1**
(45) Date de publication et mention de la délivrance du brevet: **20.05.2020**
(21) Numéro de dépôt: 06110345.3
(22) Date de dépôt: 23.02.2006
(51) Int. Cl.: C09K 3/16, C09D 5/24, B64G 1/22

(54) **PROTECTION ÉLECTROSTATIQUE, NOTAMMENT À USAGE SPATIAL**
ELEKTROSTATISCHER SCHUTZ, INSBESONDERE ZUR VERWENDUNG IM WELTRAUM
ELECTROSTATIC PROTECTION, IN PARTICULAR FOR USE IN SPACE

(30) Priorité: 24.02.2005 FR 0550504
(43) Date de publication de la demande: 30.08.2006
(73) Titulaire: Cryospace l'Air Liquide Aérospatiale, 78130 Les Mureaux (FR)
(72) Inventeur: Cargnello, Rémo, 78130, LES MUREAUX (FR); Borromee, Alain, 78150, LE CHESNAY (FR)
(74) Mandataire: Ahner, Philippe

(56) Documents cités:
- FR-A- 2 668 491
- US-A- 5 320 781
- US-A- 5 618 342
- US-A- 5 716 553
- STOYE D. (ED.): "paints, coating and solvents", 1993, VCH, WEINHEIM 211880 * page 109 *

## Description

### DOMAINE TECHNIQUE

La présente invention se rapporte à l'utilisation de charges minérales particulières en suspension dans une phase aqueuse comme additifs antistatiques dans des peintures à l'eau destinées à réaliser des revêtements de protection électrostatique.

Elle se rapporte également à un additif antistatique, à une peinture à l'eau contenant un tel additif ainsi qu'à un revêtement de protection électrostatique obtenu à partir de cette peinture.

L'invention trouve application dans les industries aéronautique et spatiale, pour faciliter l'écoulement des charges électrostatiques sur la surface externe des avions et des engins spatiaux, et en particulier des lanceurs, et les protéger des phénomènes de décharges électriques, que ce soit au sol ou en vol. A ce titre, une application privilégiée de l'invention concerne la protection électrostatique des structures cryogéniques comme les réservoirs.

Toutefois, elle peut également être utilisée dans d'autres secteurs industriels dans lesquels la survenue de décharges électriques est susceptible de mettre en danger les équipements et le personnel comme, par exemple, l'industrie pétrolière pour la protection des plates-formes, ou l'industrie chimique, pour supprimer les risques d'explosion et d'incendie, en particulier dans les usines de fabrication de poudres, explosifs et de produits inflammables.

### ÉTAT DE LA TECHNIQUE ANTÉRIEURE

L'utilisation de matériaux diélectriques (composites ou plastiques) dans la fabrication d'engins spatiaux favorise l'accumulation de charges électrostatiques à la surface de ces engins par effet triboélectrique.

Lorsque la quantité de charges électrostatiques accumulées est trop importante, des décharges électriques peuvent se produire et les perturbations électromagnétiques ainsi générées sont susceptibles de provoquer un dysfonctionnement des instruments de navigation et autres systèmes électriques.

Il est donc indispensable de munir la surface externe des engins spatiaux d'un revêtement de protection électrostatique qui doit assurer, d'une part, l'écoulement des charges électrostatiques accumulées sans créer d'interférences électromagnétiques et, d'autre part, une équipotentialité de surface quels que soient les matériaux sous-jacents.

Pour le lanceur ARIANE V par exemple, la spécification de résistivité surfacique est telle que cette résistivité doit être comprise entre 10⁵ et 10⁹ Ω/carré et doit se maintenir dans cette fourchette jusqu'à une altitude de 15 km après le décollage. Cette contrainte en engendre deux autres en vol : une contrainte thermique d'une part, qui réside dans une augmentation de la température de la surface externe du lanceur qui peut atteindre environ 100°C, et une contrainte de pression d'autre part, cette dernière chutant en effet jusqu'à atteindre une valeur de 120 mbar absolus.

Le revêtement de protection électrostatique doit aussi répondre à deux autres spécifications qui concernent, d'une part, son émissivité infrarouge qui doit être proche de 0,90 et, d'autre part, son coefficient d'absorption solaire qui ne doit pas dépasser 0,65. Ces spécifications jouent un rôle important pour le dimensionnement thermique des revêtements d'isolation "chaude" et *"froide"* appliqués sur les structures porteuses comme, par exemple, les réservoirs cryogéniques.

Actuellement, des revêtements répondant aux spécifications de résistivité surfacique, d'émissivité infrarouge et d'absorption solaire précitées sont obtenus avec des peintures polyuréthannes en phase organique, de couleur blanche, qui sont formulées spécialement pour l'industrie spatiale et dont la fonctionnalité anti-électrostatique est assurée par une charge minérale obtenue en calcinant, à une température de 700 à 1000°C, un mélange intime d'oxyde d'étain (SnO₂), de dioxyde de titane (TiO₂) et d'oxyde d'antimoine (Sb₂O₃) comme décrit dans FR-A-2 668 491 **[1]** .

Ces peintures sont préparées juste avant d'être appliquées sur un substrat en mélangeant une base polyuréthanne dans laquelle se trouve la charge minérale antistatique, et un durcisseur. Le temps de mûrissement du mélange ainsi obtenu est d'environ 30 minutes à 20°C et sa durée de vie en pot (ou "*pot-life*") est d'environ 2 heures pour une quantité d'1 kg, à 20°C et dans des conditions d'hygrométrie relative de 50°C.

En dépit de leurs bonnes caractéristiques électriques, ces peintures présentent de nombreux inconvénients, à savoir ceux :
- d'avoir une mise en œuvre contraignante de par le fait qu'un certain nombre de paramètres (comme, par exemple, la quantité de masse sèche déposée par unité de surface) doit impérativement être respecté pour garantir l'exigence de résistivité surfacique ;
- d'être onéreuses et ce, d'autant plus qu'il est fortement déconseillé de les appliquer en fin de pot-life (c'est-à-dire, en pratique, plus d'1 heure et demi après le mélange de la base et du durcisseur car la résistivité surfacique augmente alors très rapidement), ce qui grève encore leur coût ;
- de présenter un délai de péremption relativement court (généralement pas plus d'un an à compter de leur date de fabrication) ;
- de conduire à des revêtements qui présentent généralement peu de souplesse et qui, de ce fait, ont une tenue au froid médiocre et sont inadaptés à certains types de substrat ; ainsi, par exemple, l'utilisation de ces peintures convient mal à des réservoirs cryogéniques qui, d'une part, sont amenés à subir des contractions sous l'effet de la température et des dilatations sous l'effet de la pression et, d'autre part, sont revêtus de matériaux d'isolation thermique du type mousse rigide de polyuréthanne ou de liège, que l'on usine une fois appliqués sur la surface de ces réservoirs et qui libèrent alors des particules ayant pour effet de réduire l'adhérence des revêtements anti-électrostatiques ; et enfin
- d'être inflammables et toxiques en raison des quantités importantes de solvants organiques (esters et hydrocarbures aromatiques) qu'elles renferment, et de nécessiter par conséquent la mise en place de mesures de prévention très strictes et d'équipements spécifiques pour leur fabrication et leur utilisation.

Récemment, il a été proposé dans EP-A-1 422 271 **[2]** au nom de la Demanderesse de réaliser des revêtements de protection électrostatique pour lanceurs spatiaux à partir de peintures polyuréthannes en phase organique dont la fonctionnalité anti-électrostatique est assurée par des agents tensio-actifs cationiques.

Ces peintures, qui présentent de nombreux avantages par rapport aux peintures précédentes, notamment en termes de simplicité de mise en œuvre, de coûts, d'aptitude des revêtements obtenus à résister aux contractions thermiques et aux dilatations sous pression, ont toutefois l'inconvénient de renfermer elles aussi des quantités importantes de solvants organiques (butanol/éthylglycol par exemple) et donc d'être inflammables et toxiques.

Par ailleurs, il s'avère que, en raison de la présence des agents tensio-actifs, la protection électrostatique assurée par les revêtements obtenus avec ces peintures ne résiste pas suffisamment bien aux effets des fortes pluies que l'on peut rencontrer en Guyane et auxquelles le lanceur ARIANE V est susceptible d'être soumis une fois transféré sur la zone de lancement.

Les Inventeurs se sont donc fixés pour but de fournir des peintures qui permettent de réaliser des revêtements de protection électrostatique répondant aux spécifications de résistivité surfacique des lanceurs spatiaux tout en étant exemptes des inconvénients présentés par les peintures antistatiques proposées à ce jour pour ces lanceurs.

US-A-5,320,781 **[4]** décrit l'utilisation comme agent antistatique, d'un mélange comprenant deux oxydes d'étain de conductivités électriques différentes, dont l'un est dopé tandis que l'autre ne l'est pas. Dans ce document, qui ne porte nullement sur des revêtements de protection électrostatique pour lanceurs spatiaux, cet agent antistatique est ajouté sous une forme sèche à une laque à base de résine mélamine-acrylique et conduit à des résistivités surfaciques de 17 à 303 kΩ/carré selon les proportions respectives des deux pigments.

### EXPOSÉ DE L'INVENTION

Ce but et d'autres encore sont atteints par l'invention qui se rapporte, en premier lieu, à l'utilisation, dans une peinture à l'eau, d'une composition comprenant un oxyde d'étain non dopé (SnO₂), un oxyde d'étain dopé et de l'eau, en tant qu'additif antistatique pour conférer une résistivité surfacique de 10⁵ à 10⁹ Ω/carré à un revêtement obtenu par application et séchage d'une ou plusieurs couches de cette peinture sur un substrat.

Dans le cadre de leurs travaux, les Inventeurs ont, en effet, constaté que le fait d'inclure dans une peinture à l'eau, dans des proportions convenablement choisies, une composition comprenant deux oxydes d'étain dotés de conductivités électriques substantiellement différentes et aptes à s'équilibrer mutuellement, en suspension dans de l'eau ou dans une phase liquide essentiellement constituée d'eau, permet de manière surprenante de réaliser avec cette peinture des revêtements répondant à toutes les exigences requises pour les revêtements de protection électrostatique des lanceurs spatiaux.

En particulier, la résistivité surfacique des revêtements obtenus avec cette peinture s'inscrit dans la plage des valeurs de résistivité surfacique auxquelles doivent satisfaire les revêtements de protection électrostatique des lanceurs spatiaux, et se maintient dans cette plage lorsque ces revêtements sont soumis à une température de 15 à 250°C, une hygrométrie relative de 0 à 90% et une pression comprise entre la pression atmosphérique (1 bar) et 120 mbar absolus et ce, quelle que soit la nature du substrat sous-jacent.

Cependant, comme il s'agit d'une peinture à l'eau, elle offre, de plus, tous les avantages propres aux peintures à l'eau, et notamment une simplicité de fabrication et de mise en œuvre, de faibles coûts de fabrication, un long délai de péremption, une réduction des risques d'incendie, de toxicité et de pollution de l'environnement.

Selon une première disposition avantageuse de l'invention, on utilise, de préférence, comme oxyde d'étain dopé, un oxyde d'étain dopé à l'antimoine (SnO₂:Sb), et plus précisément une poudre formée de particules comprenant un cœur inerte et une couche conductrice d'oxyde d'étain dopé à l'antimoine qui recouvre ledit cœur.

De telles poudres sont notamment disponibles auprès de la société MILLIKEN sous les dénominations commerciales Zelec® ECP-M, ECP-T et ECP-S selon que le cœur des particules est constitué de mica, de dioxyde de titane (TiO₂) ou d'une bille creuse de silice.

Parmi ces poudres, on préfère tout particulièrement les poudres ZelecⓇ ECP-S dont le cœur des particules est une bille creuse de silice et, parmi celles-ci, la poudre référencée 1610-S. En effet, outre que cette poudre s'est révélée être, des différentes poudres ZelecⓇ ECP-S testées par les Inventeurs, celle qui permet d'obtenir, à efficacité égale, l'additif antistatique le moins dense et, donc, le plus adapté à un usage spatial où la recherche d'économies de poids est une priorité constante, elle présente une teinte très légèrement grise parfaitement compatible avec la réalisation de revêtements de protection électrostatique présentant une émissivité infrarouge voisine de 0,90 et un coefficient d'absorption solaire au plus égal à 0,65.

Conformément à l'invention, l'additif antistatique peut ne comprendre que les oxydes d'étain et de l'eau.

Toutefois, on préfère qu'il comprenne, de plus, une faible quantité d'un plastifiant, c'est-à-dire une quantité telle que ce plastifiant ne représente pas plus de 5% en masse de la masse de l'additif antistatique et, mieux encore, pas plus de 3% en masse de la masse de l'additif antistatique.

La présence d'une faible quantité de plastifiant dans l'additif antistatique présente, en effet, plusieurs avantages.

Elle confère, tout d'abord, aux revêtements obtenus avec la peinture une souplesse suffisante pour leur permettre, d'une part, de supporter des contractions thermiques, des dilatations sous pression et des chocs vibratoires sans se fissurer ni s'écailler et, d'autre part, d'être réalisés sur n'importe quel substrat. Notamment, cette souplesse est particulièrement utile lorsque la peinture est appliquée sur un substrat susceptible de perdre des particules comme c'est le cas des mousses rigides de polyuréthanne que l'on utilise couramment en cryogénie. En effet, il suffit de déposer une ou plusieurs couches de peinture sur ce substrat pour noyer complètement dans le revêtement toutes les cellules et les fibres apparentes à la surface du substrat, et supprimer ainsi la nécessité de procéder à un revêtement de colmatage pour remédier aux risques de pollution liés à ce type de substrat.

La présence d'une faible quantité de plastifiant dans l'additif antistatique contribue, de plus, à assurer une répartition homogène des oxydes d'étain dans la peinture et, partant, dans le revêtement obtenu avec cette peinture, et à conduire ainsi à une équipotentialité de surface et ce, quel que soit le type de substrat sous-jacent.

Par ailleurs, elle procure un certain confort lors de la fabrication de l'additif antistatique. En effet, les oxydes d'étain se présentant sous la forme de poudres de granulométrie très fine, ils ont tendance à se disperser dans l'atmosphère lorsqu'on les incorpore dans un milieu purement aqueux alors qu'ils sont immédiatement absorbés par un milieu aqueux renfermant un plastifiant, même à faible dose.

Conformément à l'invention, le plastifiant peut être n'importe quel plastifiant classiquement utilisé dans les peintures et les vernis à l'eau.

Toutefois, on préfère utiliser un ester d'acide gras et d'un polyéthylène glycol comme, par exemple, un oléate, un dioléate, un stéarate, un laurate, un dilaurate ou un cocoate d'un polyéthylène glycol tels que ceux disponibles auprès de la société STEARINERIE DUBOIS, en raison de l'absence de toxicité présentée par ce type de plastifiant.

Un plastifiant s'étant révélé particulièrement bien convenir est, par exemple, le dioléate de polyéthylène glycol de poids moléculaire égal à 200 (PEG 200) commercialisé par la société STEARINERIE DUBOIS commercialise sous la référence DUB DOL PEG 4V, et que l'on utilise, préférentiellement, à hauteur de 0,5 à 5 parties en masse pour 100 parties en masse d'eau et, mieux encore, de 2 à 3 parties en masse pour 100 parties en masse d'eau.

Comme précédemment indiqué, la peinture dans laquelle est utilisé l'additif antistatique est une peinture à l'eau.

Dans le domaine des peintures et vernis à usage industriel, on désigne communément sous les vocables *"peinture à l'eau"* et *"peinture en phase aqueuse",* une peinture dont la phase solvant est constituée soit exclusivement d'eau, soit d'un mélange eau/solvant(s) organique(s) mais dans laquelle, dans ce dernier cas, l'eau représente au moins 60% en masse de la masse de ce mélange.

Selon encore une autre disposition avantageuse de l'invention, la peinture est une peinture monocomposante, c'est-à-dire qu'elle comprend un liant autoréticulable, apte à durcir par réticulation en séchant sans que lui soit ajouté un durcisseur.

Ce liant peut être n'importe quel liant classiquement utilisé dans les peintures et les vernis à l'eau. Ainsi, il peut notamment être choisi parmi les résines acryliques, les résines alkydes, les résines vinyliques, les résines glycérophtaliques, les résines alkyde-uréthannes, les résines polyuréthannes, et leurs mélanges.

De préférence, le liant est une résine acrylique, ce type de résines présentant, en effet, des caractéristiques d'adhérence, de densité et de coûts qui en font des liants de choix pour des peintures destinées à des lanceurs spatiaux.

La peinture peut également comprendre un ou plusieurs adjuvants propres à lui conférer ou à conférer au revêtement obtenu avec cette peinture des propriétés particulières.

Ce ou ces adjuvants peuvent être choisis parmi les nombreux adjuvants classiquement utilisés dans des formulations de peinture et de vernis (pigments, charges, agents épaississants, agents de coalescence, cosolvants, agents anti-mousse, agents de neutralisation, agents dispersants, etc), pour autant qu'ils ne dégradent pas les autres propriétés de la peinture ou des revêtements, en particulier la résistivité surfacique et la souplesse de ces derniers.

Ainsi, notamment, lorsque la peinture est destinée à un usage spatial, elle comprend avantageusement au moins un pigment blanc en quantité appropriée pour conférer aux revêtements une bonne stabilité aux ultraviolets, une émissivité infrarouge voisine de 0,90 et un coefficient d'absorption solaire au plus égal à 0,65.

Quoi qu'il en soit, les proportions respectives de l'oxyde d'étain non dopé, de l'oxyde d'étain dopé et de l'eau présents dans l'additif antistatique, ainsi que la quantité d'additif antistatique que l'on inclut dans la peinture sont choisies de sorte que, compte tenu des conductivités des deux oxydes d'étain utilisés, de l'effet de dilution auquel est soumis cet additif du fait de son inclusion dans la peinture, de la nature du liant de la peinture et de la quantité de peinture que l'on prévoit de déposer par m² de substrat pour réaliser les revêtements, la résistivité surfacique de ces revêtements se situe entre 10⁵ et 10⁹ Ω/carré.

A titre d'exemple, l'addition d'une quantité comprise entre 85 et 90 parties en masse d'un additif antistatique comprenant, pour 100 parties en masse d'eau :
* de 33 à 37 parties en masse d'un oxyde d'étain non dopé,
* de 30 à 35 parties en masse d'un oxyde d'étain dopé à l'antimoine, et facultativement
* de 2 à 3 parties en masse d'un dioléate de d'un polyéthylène glycol,
à 100 parties en poids d'une peinture à l'eau commerciale, monocomposante et à liant acrylique, a permis d'obtenir des revêtements ayant une résistivité surfacique s'inscrivant dans la plage des valeurs de résistivité surfacique précédemment mentionnées avec des dépôts de 40 à 120 g (en masse sèche) de peinture par m² de substrat, correspondant aux dépôts de peinture jugés acceptables pour la réalisation de revêtements de protection électrostatique sur les lanceurs spatiaux.

Parmi les compositions susceptibles d'être utilisées comme additifs antistatiques conformément à l'invention, on préfère celles qui comprennent un oxyde d'étain non dopé (SnO₂), un oxyde d'étain dopé à l'antimoine (SnO₂:Sb), un plastifiant et de l'eau.

Aussi, l'invention a-t-elle également pour objet un additif antistatique ayant une telle composition.

Dans cet additif antistatique, l'oxyde d'étain dopé à l'antimoine est, de préférence, présent sous la forme de particules comprenant un cœur inerte et une couche d'oxyde d'étain dopé à l'oxyde d'antimoine qui recouvre ledit cœur et, en particulier, de particules dont le cœur est une bille creuse en silice telles que celles précédemment mentionnées.

Conformément à l'invention, l'additif antistatique comprend, de préférence, pour 100 parties en masse d'eau :
- de 33 à 37 parties en masse d'oxyde d'étain non dopé, et
- de 30 à 35 parties en masse d'oxyde d'étain dopé à l'antimoine.

Le plastifiant est, quant-à-lui, avantageusement un ester d'acide gras et d'un polyéthylène glycol. Là également, cet ester peut notamment être un oléate, un dioléate, un stéarate, un laurate, un dilaurate ou un cocoate d'un polyéthylène glycol, un dioléate d'un polyéthylène glycol et, plus spécifiquement, d'un polyéthylène glycol de poids moléculaire égal à 200, convenant particulièrement bien.

Conformément à l'invention, ce dioléate de polyéthylène glycol est, de préférence, présent dans l'additif antistatique à hauteur de 0,5 à 5 parties en masse pour 100 parties en masse d'eau et, mieux encore, à hauteur de 2 à 3 parties en masse pour 100 parties en masse d'eau.

L'additif antistatique selon l'invention peut être obtenu en dissolvant le plastifiant dans l'eau, puis en mélangeant les deux oxydes d'étain à la solution ainsi formée jusqu'à obtention d'un mélange homogène. Sa fabrication est donc extrêmement simple et ne nécessite aucun matériel spécifique.

L'additif antistatique peut alors être stocké pendant plusieurs années avant d'être utilisé, pour autant qu'il soit conservé dans un récipient hermétique apte à le préserver à la fois d'une évaporation de l'eau qu'il renferme et d'une contamination par le milieu environnant (par la poussière par exemple).

Il peut également être utilisé immédiatement, auquel cas il peut aussi bien être ajouté à une peinture à l'eau préalablement préparée, par exemple une peinture commercialement disponible, qu'être incorporé dans une peinture à l'eau au cours du processus de fabrication de cette peinture.

L'invention a aussi pour objet une peinture monocomposante à l'eau, prête à l'emploi, qui comprend une résine acrylique en tant que liant, au moins de l'eau en tant que solvant et un additif antistatique tel que précédemment défini.

De préférence, cette peinture comprend de plus au moins un pigment blanc.

La peinture selon l'invention est susceptible d'être appliquée sur un substrat par n'importe quelle technique d'application utilisée pour les peintures et les vernis. Toutefois, elle se prête particulièrement bien à une pulvérisation, par exemple au moyen d'un pistolet pneumatique.

Cette pulvérisation est, de préférence, réalisée à température ambiante et sous une hygrométrie relative inférieure à 60%, les Inventeurs ayant, en effet, constaté que ces conditions conduisent à une optimisation des propriétés anti-électrostatiques des revêtements résultants. Pour les mêmes raisons, le séchage de la couche ou des couches de peinture ainsi appliquées est, lui aussi, préférentiellement effectué à température ambiante et sous une hygrométrie relative inférieure à 60%.

Le dépôt d'une seule couche de quelques microns d'épaisseur, de l'ordre de 10 à 50 µm, de la peinture selon l'invention suffit en principe à obtenir un revêtement de protection électrostatique dont la résistivité surfacique est comprise entre 10⁵ et 10⁹ Ω/carré, ce qui, d'une part, favorise l'adhérence de ce revêtement sur son substrat et, d'autre part, permet de limiter au maximum le poids de ce revêtement, ce qui est extrêmement appréciable pour des applications spatiales ou aéronautiques. Il est, toutefois, possible, si on le souhaite d'appliquer la peinture en une couche ou plusieurs couches conduisant à un dépôt plus épais.

Ainsi, il n'est pas nécessaire, avec la peinture selon l'invention, d'enduire préalablement le substrat d'une sous-couche d'accrochage destinée à augmenter l'adhérence du revêtement sur ce support.

Par ailleurs, même lorsque cette peinture est appliquée sur un substrat susceptible de perdre des particules comme une mousse rigide de polyuréthanne, il n'est pas non plus nécessaire de recouvrir le revêtement résultant, une fois sec, d'un produit de colmatage destiné à limiter les risques de pollution générée par la perte de ces particules. Comme précédemment indiqué, il suffit, en effet, de déposer une ou plusieurs couches de peinture d'épaisseur suffisante pour noyer dans cette couche ou ces couches toutes les cellules et les fibres apparentes à la surface du substrat.

La composition selon l'invention présente donc de nombreux avantages.

En effet, outre qu'elle permet d'obtenir des revêtements de protection électrostatique extrêmement satisfaisants, tant en termes de résistivité surfacique, d'émissivité infrarouge, d'absorption solaire, d'adhérence vis-à-vis des supports qu'ils recouvrent, de tenue au vieillissement, de souplesse et, partant, de tenue au froid et de résistance aux contractions thermiques et aux dilatations sous pression, et ce, quels que soient les substrats sous-jacents, elle est simple à fabriquer et à mettre en œuvre.

Par ailleurs, elle est économiquement très intéressante et ce, pour trois raison. D'une part, elle est susceptible d'être préparée à partir de matières premières peu onéreuses ; d'autre part, elle est utilisable jusqu'au terme de son pot-life, lequel s'est avéré pouvoir être de 8 heures ; enfin, elle ne nécessite l'usage d'aucun solvant organique pour le nettoyage du matériel servant à la fabriquer ou à l'appliquer, ni la mise en place de mesures strictes et d'équipements spécifiques destinés à prévenir les risques d'incendie, d'intoxication ou de pollution (systèmes antidéflagrants par exemple).

D'autres caractéristiques et avantages de l'invention apparaîtront mieux à la lecture du complément de description qui suit et qui se rapporte à un exemple de réalisation d'une peinture selon l'invention et de démonstration des propriétés des revêtements obtenus à partir de cette peinture.

Bien entendu, cet exemple est donné uniquement à titre d'illustration de l'objet de l'invention et ne constitue en aucune manière une limitation de cet objet.

### EXPOSÉ DÉTAILLÉ D'UN MODE DE RÉALISATION PARTICULIER

On a réalisé une peinture selon l'invention en procédant comme suit.

On a tout d'abord préparé un additif antistatique en ajoutant successivement à 100 parties en poids d'eau et en mélangeant continuellement :
- 2,5 parties en masse de dioléate de polyéthylène glycol 200 végétal (DUB DOL PEG 4V - STEARINERIE-DUBOIS),
- 35 parties en masse d'oxyde d'étain(IV) non dopé (Superlite® - SOGEMET), et
- 33,3 parties en masse d'une poudre formée de billes creuses de silice recouvertes d'oxyde d'étain dopé à l'antimoine (ZelecⓇ ECP 1610-S - MILLIKEN) .

Pour réaliser la peinture selon l'invention, on a mélangé :
- 87 parties en masse de l'additif antistatique obtenu ci-dessus, et
- 100 parties en masse d'une peinture à l'eau commerciale, monocomposante et à liant acrylique, de couleur blanche (Acryvic Satin - JANVIC),
et on a poursuivi le mélange jusqu'à obtention d'une peinture totalement homogène.

La peinture ainsi obtenue est de couleur blanche très légèrement grise à cause de la présence du ZelecⓇ ECP 1610-S. Elle présente une densité proche de 1 et un pot-life d'environ 8 heures à température ambiante (18-24°C) et sous une hygrométrie relative inférieure à 60°C.

Les propriétés de résistivité surfacique, d'absorption solaire et d'émissivité infrarouge de revêtements obtenus avec cette peinture ont été testées en appliquant cette dernière sur différents types de substrat.

Pour ce faire, la peinture a été appliquée par pulvérisation et sous atmosphère contrôlée (20°C, hygrométrie relative < 60%) sur des éprouvettes carrées, mesurant 15 cm de côté et respectivement constituées :
- d'une mousse rigide de polychlorure de vinyle (mousse PVC),
- d'une mousse rigide de polyuréthanne (mousse PUR),
- de liège,
- d'un matériau isolant formé d'un élastomère chargé en silice, comme décrit dans FR-A-2 732 688 **[3],** et
- d'alliages d'aluminium type 2219 et 6061.

Les mousses rigides de polychlorure de vinyle et de polyuréthanne, le liège ainsi que l'élastomère chargé en silice ont été choisis comme substrats car ce sont des matériaux classiquement utilisés comme revêtements d'isolation thermique sur les réservoirs cryogéniques des lanceurs spatiaux. Quant aux alliages d'aluminium, ils sont couramment employés dans les industries aéronautique et spatiale.

Les applications ont été réalisées de sorte que soit déposée une masse sèche de peinture de 100 à 110 g/m² sur chaque éprouvette.

La spécification de résistivité surfacique des revêtements destinés au lanceur ARIANE V exigeant le maintien d'une résistivité comprise entre 0,1 et 10³ MΩ/carrés à une température d'environ 100°C, les éprouvettes ont été soumises, après séchage des revêtements, à un chauffage en étant placées, soit directement sur une plaque chauffante pour les éprouvettes constituées d'un matériau conducteur de chaleur (aluminium), soit dans une étuve chauffée pour les éprouvettes constituées d'un matériau thermiquement isolant (mousses de PVC et de polyuréthanne, liège, élastomère chargé en silice).

La résistivité surfacique des différents revêtements a été mesurée au moyen d'un mégohmmètre SEFELEC M500 muni d'électrodes en cuivre et sous une tension de mesure de 500 volts continus. Leur coefficient d'absorption solaire a été déterminé avec un spectrophotomètre UV-visible-proche IR, tandis que leur émissivité infrarouge a été déterminée à l'aide d'un thermomètre IR à émissivité réglable TASCO THI-300.

Tous les revêtements ont présenté, même lorsqu'ils ont été portés à des températures supérieures à 140°C, une résistivité surfacique entrant dans la gamme des valeurs exigées pour le lanceur ARIANE V et ce, quel que soit le support sous-jacent.

La valeur de résistivité surfacique des revêtements s'est située en moyenne aux alentours de 50 MΩ/carré à température ambiante et n'a que très peu augmenté (c'est-à-dire de moins de 10 MΩ/carré) à des températures comprises entre 100 et 140°C. Les tests ont également montré que les revêtements présentaient des propriétés antistatiques à une température supérieure à 140°C sans subir de dégradations notables.

Ces revêtements ont présenté, par ailleurs, un coefficient d'absorption solaire moyen d'environ 0,65 ainsi qu'une valeur d'émissivité infrarouge moyenne de 0,87.

Les éprouvettes ont aussi été soumises à un vide de 900 mbar de dépression. La résistivité surfacique des revêtements n'a pas varié ou de façon insignifiante.

Des mesures de résistivité surfacique réalisées sur des éprouvettes exposées sept mois à de fortes pluies doublées d'un brouillard salin n'ont pas permis de mettre en évidence une altération des propriétés de protection électrostatique des revêtements obtenus avec une peinture selon l'invention.

Enfin, des revêtements ont également été réalisés avec des peintures obtenues en incorporant directement du ZelecⓇ ECP 1610-S dans de l'Acryvic Satin, puis en ajustant la résistivité des mélanges résultants avec des doses appropriées d'oxyde d'étain non dopé. Les résultats des mesures de résistivité surfacique réalisées sur ces revêtements se sont révélés décevants, notamment parce qu'ils n'étaient pas reproductibles et se sont traduits par une grande variabilité d'une projection à l'autre sur des substrats identiques.

### REFERENCES

[1] FR-A-2 668 491
[2] EP-A-1 422 271
[3] FR-A-2 732 688
[4] US-A-5,320,781

## Revendications

1. Utilisation, dans une peinture à l'eau, d'une composition comprenant un oxyde d'étain non dopé, un oxyde d'étain dopé et de l'eau, en tant qu'additif antistatique pour conférer une résistivité surfacique de 10⁵ à 10⁹ Ω/carré à un revêtement obtenu par application et séchage d'une ou plusieurs couches de cette peinture sur un substrat.

2. Utilisation selon la revendication 1, dans laquelle l'oxyde d'étain dopé est un oxyde d'étain dopé à l'antimoine.

3. Utilisation selon la revendication 2, dans laquelle on utilise, comme oxyde d'étain dopé à l'antimoine, une poudre formée de particules comprenant un cœur inerte et une couche d'oxyde d'étain dopé à l'oxyde d'antimoine qui recouvre ledit cœur.

4. Utilisation selon la revendication 3, dans laquelle le cœur des particules d'oxyde d'étain dopé avec de l'antimoine est une bille creuse en silice.

5. Utilisation selon l'une quelconque des revendications précédentes, dans laquelle l'additif antistatique comprend de plus un plastifiant.

6. Utilisation selon la revendication 5, dans laquelle le plastifiant ne représente pas plus de 5% en masse de la masse de l'additif antistatique.

7. Utilisation selon la revendication 6, dans laquelle le plastifiant ne représente pas plus de 3% en masse de la masse de l'additif antistatique.

8. Utilisation selon l'une quelconque des revendications 5 à 7, dans laquelle le plastifiant est un ester d'acide gras et d'un polyéthylène glycol.

9. Utilisation selon la revendication 8, dans laquelle le plastifiant est choisi parmi les oléates, les dioléates, les stéarates, les laurates, les dilaurates et les cocoates d'un polyéthylène glycol.

10. Utilisation selon la revendication 9, dans laquelle le plastifiant est un dioléate d'un polyéthylène glycol.

11. Utilisation selon la revendication 10, dans laquelle le plastifiant est un dioléate d'un polyéthylène glycol de poids moléculaire égal à 200.

12. Utilisation selon la revendication 10 ou la revendication 11, dans laquelle le dioléate de polyéthylène glycol est présent dans l'additif antistatique à hauteur de 0,5 à 5 parties en masse pour 100 parties en masse d'eau.

13. Utilisation selon la revendication 12, dans laquelle le dioléate de polyéthylène glycol est présent dans l'additif antistatique à hauteur de 2 à 3 parties en masse pour 100 parties en masse d'eau.

14. Utilisation selon l'une quelconque des revendications précédentes, dans laquelle la peinture est une peinture monocomposante.

15. Utilisation selon la revendication 14, dans laquelle la peinture comprend un liant choisi parmi les résines acryliques, les résines alkydes, les résines vinyliques, les résines glycérophtaliques, les résines alkyde-uréthannes, les résines polyuréthannes, et leurs mélanges.

16. Utilisation selon la revendication 15, dans laquelle le liant est une résine acrylique.

17. Utilisation selon les revendications 2 à 16, dans laquelle l'additif antistatique comprend, pour 100 parties en masse d'eau :
* de 33 à 37 parties en masse d'oxyde d'étain non dopé,
* de 30 à 35 parties en masse d'oxyde d'étain dopé à l'antimoine, et facultativement
* de 2 à 3 parties en masse d'un dioléate de polyéthylène glycol.

18. Additif antistatique comprenant un oxyde d'étain non dopé, un oxyde d'étain dopé à l'antimoine, un plastifiant et de l'eau.

19. Additif selon la revendication 18, dans lequel l'oxyde d'étain dopé à l'antimoine est présent sous la forme de particules comprenant un cœur inerte et une couche d'oxyde d'étain dopé à l'oxyde d'antimoine qui recouvre ledit cœur.

20. Additif selon la revendication 19, dans lequel le cœur des particules d'oxyde d'étain dopé avec de l'antimoine est une bille creuse en silice.

21. Additif selon l'une quelconque des revendications 18 à 20, qui comprend pour 100 parties en masse d'eau :
- de 33 à 37 parties en masse d'oxyde d'étain non dopé, et
- de 30 à 35 parties en masse d'oxyde d'étain dopé à l'antimoine.

22. Additif selon l'une quelconque des revendications 18 à 21, dans lequel le plastifiant est un ester d'acide gras et d'un polyéthylène glycol.

23. Additif selon la revendication 22, dans lequel le plastifiant est choisi parmi les oléates, les dioléates, les stéarates, les laurates, les dilaurates et les cocoates d'un polyéthylène glycol.

24. Additif selon la revendication 23, dans lequel le plastifiant est un dioléate d'un polyéthylène glycol.

25. Additif selon la revendication 24, dans lequel le plastifiant est un dioléate d'un polyéthylène glycol de poids moléculaire égal à 200.

26. Additif selon la revendication 24 ou la revendication 25, dans lequel le dioléate de polyéthylène glycol est présent à hauteur de 0,5 à 5 parties en masse pour 100 parties en masse d'eau.

27. Additif selon la revendication 26, dans lequel le dioléate de polyéthylène glycol est présent à hauteur de 2 à 3 parties en masse pour 100 parties en masse d'eau.

28. Peinture monocomposante à l'eau, prête à l'emploi, comprenant une résine acrylique en tant que liant, au moins de l'eau en tant que solvant, et un additif antistatique tel que défini dans l'une quelconque des revendications 18 à 27.

29. Peinture selon la revendication 28, qui comprend de plus au moins un pigment blanc.

30. Revêtement de protection électrostatique obtenu par application et séchage sur un substrat d'une ou plusieurs couches d'une peinture telle que définie dans la revendication 28 ou la revendication 29.

## Patentansprüche

1. Verwendung einer Zusammensetzung, die ein undotiertes Zinnoxid, ein dotiertes Zinnoxid und Wasser enthält, in einer Farbe auf Wasserbasis, als antistatisches Additiv, um einer Beschichtung, die durch Auftragen und Trocknen einer oder mehrerer Schichten dieser Farbe auf ein Substrat erhalten wird, einen spezifischen Oberflächenwiderstand von 10⁵ bis 10⁹ Ω/Quadrat zu verleihen.

2. Verwendung nach Anspruch 1,
wobei das dotierte Zinnoxid ein mit Antimon dotiertes Zinnoxid ist.

3. Verwendung nach Anspruch 2,
wobei als Antimon-dotiertes Zinnoxid ein Pulver verwendet wird, das aus Teilchen gebildet ist, die einen inerten Kern und eine den Kern bedeckende Schicht aus mit Antimonoxid dotiertem Zinnoxid umfassen.

4. Verwendung nach Anspruch 3,
wobei der Kern der Teilchen aus Antimon-dotiertem Zinnoxid ein Hohlkügelchen aus Siliciumdioxid ist.

5. Verwendung nach einem der vorangehenden Ansprüche,
wobei das antistatische Additiv ferner einen Weichmacher enthält.

6. Verwendung nach Anspruch 5,
wobei der Weichmacher nicht mehr als 5 Masse-% der Masse des antistatischen Additivs beträgt.

7. Verwendung nach Anspruch 6,
wobei der Weichmacher nicht mehr als 3 Masse-% der Masse des antistatischen Additivs beträgt.

8. Verwendung nach einem der Ansprüche 5 bis 7,
wobei der Weichmacher ein Ester aus Fettsäure und Polyethylenglykol ist.

9. Verwendung nach Anspruch 8,
wobei der Weichmacher ausgewählt ist aus Oleaten, Dioleaten, Stearaten, Lauraten, Dilauraten und Cocoaten eines Polyethylenglykols.

10. Verwendung nach Anspruch 9,
wobei der Weichmacher ein Dioleat eines Polyethylenglykols ist.

11. Verwendung nach Anspruch 10,
wobei der Weichmacher ein Dioleat eines Polyethylenglykols mit einem Molekulargewicht von 200 ist.

12. Verwendung nach Anspruch 10 oder Anspruch 11,
wobei das Polyethylenglykol-Dioleat in dem antistatischen Additiv in einer Menge von 0,5 bis 5 Massenteilen pro 100 Massenteile Wasser enthalten ist.

13. Verwendung nach Anspruch 12,
wobei das Polyethylenglykol-Dioleat in dem antistatischen Additiv in einer Menge von 2 bis 3 Massenteilen pro 100 Massenteile Wasser enthalten ist.

14. Verwendung nach einem der vorangehenden Ansprüche,
wobei die Farbe eine Einkomponentenfarbe ist.

15. Verwendung nach Anspruch 14,
wobei die Farbe ein Bindemittel, ausgewählt aus Acrylharzen, Alkydharzen, Vinylharzen, Glycerophthalharzen, Alkydurethanharzen, Polyurethanharzen und deren Gemischen, enthält.

16. Verwendung nach Anspruch 15,
wobei das Bindemittel ein Arylharz ist.

17. Verwendung nach den Ansprüchen 2 bis 16,
wobei das antistatische Additiv pro 100 Massenteile Wasser enthält:
* 33 bis 37 Massenteile undotiertes Zinnoxid,
* 30 bis 35 Massenteile Antimon-dotiertes Zinnoxid und wahlweise
* 2 bis 3 Massenteile eines Polyethylenglykol-Dioleats.

18. Antistatisches Additiv, das undotiertes Zinnoxid, Antimon-dotiertes Zinnoxid, einen Weichmacher und Wasser enthält.

19. Additiv nach Anspruch 18,
wobei das Antimon-dotierte Zinnoxid in Form von Teilchen vorliegt, die einen inerten Kern und eine den Kern bedeckende Schicht aus mit Antimonoxid dotiertem Zinnoxid umfassen.

20. Additiv nach Anspruch 19,
wobei der Kern der Teilchen aus Antimon-dotiertem Zinnoxid ein Hohlkügelchen aus Siliciumdioxid ist.

21. Additiv nach einem der Ansprüche 18 bis 20,
das pro 100 Massenteile Wasser enthält:
- 33 bis 37 Massenteile undotiertes Zinnoxid, und
- 30 bis 35 Massenteile Antimon-dotiertes Zinnoxid.

22. Additiv nach einem der Ansprüche 18 bis 21,
wobei der Weichmacher ein Ester aus Fettsäure und Polyethylenglykol ist.

23. Additiv nach Anspruch 22,
wobei der Weichmacher ausgewählt ist aus Oleaten, Dioleaten, Stearaten, Lauraten, Dilauraten und Cocoaten eines Polyethylenglykols.

24. Additiv nach Anspruch 23,
wobei der Weichmacher ein Dioleat eines Polyethylenglykols ist.

25. Additiv nach Anspruch 24,
wobei der Weichmacher ein Dioleat eines Polyethylenglykols mit einem Molekulargewicht von 200 ist.

26. Additiv nach Anspruch 24 oder Anspruch 25,
wobei das Polyethylenglykol-Dioleat in einer Menge von 0,5 bis 5 Massenteilen pro 100 Massenteile Wasser enthalten ist.

27. Additiv nach Anspruch 26,
wobei das Polyethylenglykol-Dioleat in einer Menge von 2 bis 3 Massenteilen pro 100 Massenteile Wasser enthalten ist.

28. Gebrauchsfertige Einkomponentenfarbe auf Wasserbasis, enthaltend ein Acrylharz als Bindemittel, zumindest Wasser als Lösungsmittel und ein antistatisches Additiv nach einem der Ansprüche 18 bis 27.

29. Farbe nach Anspruch 28, ferner enthaltend zumindest ein Weißpigment.

30. Elektrostatische Schutzbeschichtung, die durch Auftragen und Trocknen einer oder mehrerer Schichten einer Farbe nach Anspruch 28 oder Anspruch 29 auf ein Substrat erhalten wird.

## Claims

1. Use, in a water-based paint, of a composition comprising an undoped tin oxide, a doped tin oxide and water, as an antistatic additive to impart a surface resistivity of 10⁵ to 10⁹Ω/square to a coating obtained by applying and drying one or more layers of this paint onto a substrate.

2. Use according to claim 1, wherein the doped tin oxide is an antimony-doped tin oxide.

3. Use according to claim 2, wherein it is used, as an antimony-doped tin oxide, a powder formed by particles comprising an inert core and an antimony oxide-doped tin oxide layer which covers said core.

4. Use according to claim 3, wherein the core of the antimony-doped tin oxide particles is a hollow silica bead.

5. Use according to any of the preceding claims, wherein the antistatic additive further comprises a plasticizer.

6. Use according to claim 5, wherein the plasticizer does not represent more than 5% by mass of the mass of the antistatic additive.

7. Use according to claim 6, wherein the plasticizer does not represent more than 3% by mass of the mass of the antistatic additive.

8. Use according to any of claims 5 to 7, wherein the plasticizer is a polyethylene glycol fatty acid ester.

9. Use according to claim 8, wherein the plasticizer is selected from polyethylene glycol oleates, dioleates, stearates, laurates, dilaurates and cocoates.

10. Use according to claim 9, wherein the plasticizer is a polyethylene glycol dioleate.

11. Use according to claim 10, wherein the plasticizer is a polyethylene glycol dioleate with a molecular weight equal to 200.

12. Use according to claim 10 or claim 11, wherein the polyethylene glycol dioleate is present in the antistatic additive in an amount of 0.5 to 5 parts by mass with respect to 100 parts by mass of water.

13. Use according to claim 12, wherein the polyethylene glycol dioleate is present in the antistatic additive in an amount of 2 to 3 parts by mass with respect to 100 parts by mass of water.

14. Use according to any of the preceding claims, wherein the paint is a single-component paint.

15. Use according to claim 14, wherein the paint comprises a binder selected from acrylic resins, alkyd resins, vinyl resins, glyceryl phthalate resins, alkyd-urethane resins, polyurethane resins, and mixtures thereof.

16. Use according to claim 15, wherein the binder is an acrylic resin.

17. Use according to claims 2 to 16, wherein the antistatic additive comprises, with respect to 100 parts by mass of water:
* 33 to 37 parts by mass of undoped tin oxide,
* 30 to 35 parts by mass of antimony-doped tin oxide, and optionally
* 2 to 3 parts by mass of a polyethylene glycol dioleate.

18. Antistatic additive comprising an undoped tin oxide, an antimony-doped tin oxide, a plasticizer and water.

19. Additive according to claim 18, wherein the antimony-doped tin oxide is present as particles comprising an inert core and an antimony oxide-doped tin oxide layer which covers said core.

20. Additive according to claim 19, wherein the core of the antimony-doped tin oxide particles is a hollow silica bead.

21. Additive according to any of claims 18 to 20, which comprises with respect to 100 parts by mass of water:
- 33 to 37 parts by mass of undoped tin oxide, and
- 30 to 35 parts by mass of antimony-doped tin oxide.

22. Additive according to any of claims 18 to 21, wherein the plasticizer is a polyethylene glycol fatty acid ester.

23. Additive according to claim 22, wherein the plasticizer is selected from polyethylene glycol oleates, dioleates, stearates, laurates, dilaurates and cocoates.

24. Additive according to claim 23, wherein the plasticizer is a polyethylene glycol dioleate.

25. Additive according to claim 24, wherein the plasticizer is a polyethylene glycol dioleate with a molecular weight equal to 200.

26. Additive according to claim 24 or claim 25, wherein the polyethylene glycol dioleate is present in 0.5 to 5 parts by mass with respect to 100 parts by mass of water.

27. Additive according to claim 26, wherein the polyethylene glycol dioleate is present in an amount of 2 to 3 parts by mass with respect to 100 parts by mass of water.

28. Ready for use, water-based, single-component paint, comprising an acrylic resin as a binder, at least water as a solvent, and an antistatic additive such as defined in any of claims 18 to 27.

29. Paint according to claim 28, which further comprises at least one white pigment.

30. Electrostatic protective coating obtained by applying and drying one or more layers of a paint as defined in claim 28 or claim 29 onto a substrate.
